# EUROPEAN PATENT SPECIFICATION

(11) **EP 4 314 572 B1**
(45) Date of publication and mention of the grant of the patent: **26.02.2025**
(21) Application number: 22716939.8
(22) Date of filing: 22.03.2022
(51) Int. Cl.: F16B 7/18, F16B 37/04

(54) **ANCHORING ELEMENT**
VERANKERUNGSELEMENT
ÉLÉMENT D'ANCRAGE

(30) Priority: 25.03.2021 NL 2027837
(43) Date of publication of application: 07.02.2024
(73) Proprietor: J. van Walraven Holding B.V., 3641 RK Mijdrecht (NL)
(72) Inventor: NIJDAM, Frank, 3846 JS HARDERWIJK (NL); JUZAK, Marek, 3641 TK MIJDRECHT (NL)
(74) Representative: EP&C
(86) International application number: PCT/EP2022/057412
(87) International publication number: WO 2022/200305

(56) References cited:
- EP-A2- 0 337 118
- CA-A- 1 181 921
- DE-A1- 2 211 523
- DE-A1- 3 537 135
- DE-B- 1 018 267
- GB-A- 857 294
- US-A- 6 086 300

## Description

The invention relates to an anchoring element for anchoring a fastening assembly to a C-shaped mounting rail, the anchoring element comprising an oblong metal body having opposite longer longitudinal sides and opposite shorter transversal sides, and having a top surface, wherein a pair of parallel toothings is formed in the top surface, said toothings extending substantially straight from one of the longitudinal sides to the other one of the longitudinal sides.

In the field of installation parts, the use of mounting rails and anchoring elements in fastening assemblies is widespread and well known. Mounting rails are channel shaped profiled section elements having flanges defining a longitudinal slot between them. A particular type of mounting rail is known in the field as a "strut rail", which is a mounting rail having generally a C-shaped cross section, wherein the flanges are folded inwardly such that the edges of the flanges are facing the bottom of the rail.

The US Design Patent 494,887 shows a fastening assembly for use with mounting rails. This known fastening assembly includes a metal washer element, a plastic support and a metal anchoring element. The metal anchoring element is formed as an oblong nut with a threaded bore in the centre. On a top side of the oblong nut, grooves are formed which extend in the transverse direction. This is typical for channel fasteners which are used in combination with strut rails. The edges of the respective flanges of the strut rail are in a mounted state received in the respective grooves on the upper side of the nut.

US 4.830.531 shows another fastening assembly for use with a strut rail. This known fastening assembly comprises an anchoring element, a washer and a threaded stud portion connected to the anchoring element and extending through a bore in the washer. A threaded nut is screwed on the threaded stud and a biasing member, e.g. a coil spring, is arranged around the stud between the washer and the nut. In a preliminary mounting state, the spring biases the anchoring element against the flanges. The anchoring element has parallel grooves in which protrusions are formed which are adapted to cut into the flange edges to improve the grip. A similar anchoring element is shown in EP 0 337 118 A2.

In US 2003/0122044 is shown a mounting rail having a toothing provided on the flange edges and an anchoring element which has toothing zones extending in the transverse direction of the anchoring element at a top side to cooperate with the toothing provided on the edge of the flanges.

The most oblong anchoring elements are inserted through the slot of the rail profile with their longer sides parallel to the rail's flanges, then turned clockwise around the axis defined by the threaded hole or stud until their shorter sides block further rotation by engaging the inner wall of the rail profile as is for example illustrated in US 4.830.531 or EP 0 337 118.

Mounting rail profiles, and also the so-called strut rail profiles, are to a great extent standardized. They have a set of outer dimensions which are fixed, irrespective of the material thickness used. Moreover, the width of the longitudinal slot in the rail profile is also fixed irrespective of the material thickness.

However, in practise the strut rail profile can be produced in several material thicknesses. The difference in material thickness, combined with a set of fixed outer dimensions causes a variance in the space inside the profile. This variance is furthermore influenced by production tolerances.

The variance in available space causes the anchoring element to be positioned slightly different in profiles with different wall thicknesses. This may cause a misalignment of the toothing on the top surface of the anchoring element and the inwardly folded flanges. Especially with mounting rail profiles wherein the flanges are provided with toothing, the grip between the anchoring element and the flanges of the mounting rail, i.e. the resistance against sliding of the anchoring element in the longitudinal direction of the mounting rail, may be significantly reduced by the mentioned misalignment.

The invention has for an object to provide an anchoring element which removes or at least mitigates the above-mentioned problem.

This object is achieved by an anchoring element according to claim 1.

According to the invention the anchoring element has toothings having teeth which are curved having a radius of curvature substantially parallel to the top surface of the anchoring element. The curvature of the teeth, preferably in combination with a wider track of teeth, ensures that respective of the relative orientation of the anchoring element in a rail profile, the teeth always align with the teeth on the rail profile.

In a possible embodiment the teeth have a convex side and a concave side, wherein the convex side faces one of the longitudinal sides of the anchoring element, and the concave side faces the other longitudinal side of the anchoring element. The teeth of the respective toothings may be facing with their convex side in opposite directions. Alternatively, it is also foreseen that the teeth of the respective toothings are facing with their convex side in the same direction. Both the alternatives provide a good grip of the anchoring element on the flanges of the rail profile.

In a possible embodiment the anchoring element according to the invention may be provided with a threaded bore in the centre. However, in another possible embodiment a fastener rod is fixedly connected to the anchoring element. The fastener rod may be threaded rod.

In a possible embodiment of the anchoring element the longitudinal sides are straight and mutually parallel. Preferably the transverse sides extend under an angle smaller than 90° with respect to the longitudinal sides. The transverse sides may have a curved portion and a straight portion.

The invention also relates to a fastening assembly comprising an anchoring element as described in the above and furthermore comprising a washer and an intermediate part interconnecting the anchoring element and the washer.

In a possible embodiment the intermediate part is a part made of plastic.

In a further embodiment the intermediate part comprises spring members allowing to hold the fastening unit on the mounting rail in a preliminary mounting state.

The invention also relates to a fastening assembly comprising an anchoring element as described in the above and furthermore comprising a fastener rod connected to the anchoring element.

The invention also relates to the use of an anchoring element as described in the above for mounting an object to a mounting rail,
said mounting rail having generally a C-shaped cross section and including a pair of inwardly folded longitudinal flanges defining a longitudinal slot between them,
wherein the longitudinal sides of the anchoring element are aligned with the longitudinal slot of the mounting rail so as to allow introduction of the anchoring element into the mounting rail through the longitudinal slot, and wherein after introduction of the anchoring element through the longitudinal slot of the mounting rail, the anchoring element is rotated to a mounted state around a rotation axis normal to the upper surface of the anchoring element to misalign the longitudinal sides of the anchoring element with the longitudinal slot to a mounted state, wherein the toothing engages the edges of the flanges of the mounting rail.

The invention will be further explained in the following detailed description with reference to the drawing, wherein:
Fig. 1 shows in a top elevational view a first embodiment of an anchoring element according to the invention,
Fig. 2 shows in a view in perspective the anchoring element of Fig. 1,
Fig. 3 shows in a top elevational view a second embodiment of an anchoring element according to the invention,
Fig. 4 shows in a view in perspective the arrangement of an anchoring element of Fig. 1 in a mounting rail,
Fig. 5 shows in a view in perspective a possible embodiment of a fastening assembly according to the invention,
Fig. 6A - 6D illustrate the influence of variance in the dimensions of the mounting rail on the arrangement of Fig. 4, and
Fig. 7 shows in a view in perspective a fastening assembly having a threaded rod connected to an anchoring element.

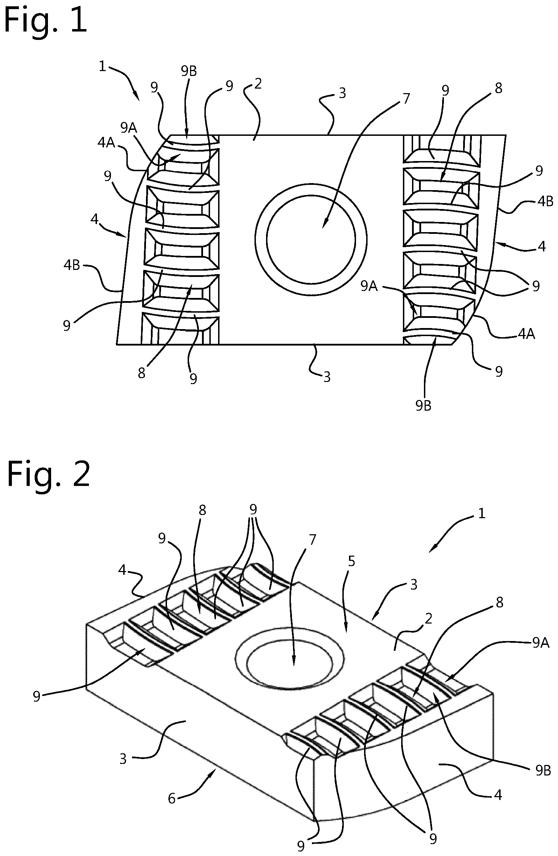

Figs. 1 and 2 show an anchoring element 1. The anchoring element 1 has an oblong body 2 that is made of strip metal, e.g. steel. The oblong body 2 has two opposite longer longitudinal sides 3 and two shorter transversal sides 4. The body 2 has a top surface 5 and a bottom surface 6.

The longitudinal sides 3 are straight and mutually parallel. The transversal sides 4 have a curved portion 4A and a straight portion 4B. The straight portion 4B of the transversal sides 4 extends under an angle smaller than 90° with respect to the longitudinal side 3 adjoining it, in the embodiment shown in Figs. 1 and 2 an angle of about 85°.

In the embodiment seen in Figs. 1 and 2 a central bore 7 is provided which extends from the top surface 5 to the bottom surface 6. The central bore 7 is provided with a female thread such that anchoring element 1 has the function of a nut which can cooperate with a threaded rod or bolt. In the relevant technical field this kind of anchoring element is sometimes called a "slidenut".

In the top surface two toothings 8 are provided. The toothings 8 each comprises a series of teeth 9, which series of teeth 9 extends substantially rectilinear in the transverse direction of the anchoring element 1 from one longitudinal side 3 to the opposite longitudinal side 3. The series of teeth 9 extend parallel to each other and the distance between them is adapted to the distance between the flanges of a mounting rail as will be become clear further below.

Each tooth 9 has a curved shape as is best visible in top elevational view of Fig. 1. The radius of curvature is substantially parallel to the top surface 5 of the anchoring element 1. The curvature provides the tooth a convex side 9A and a concave side 9B. The convex side 9A is facing one longitudinal side 3 of the anchoring element 1 and the concave side 9B is facing the opposite longitudinal side 3 of the anchoring element 1. In the embodiment shown in Figs. 1 and 2, the curvatures of the teeth 9 of the different toothings 8 are opposite, i.e. the teeth 9 of one toothing 8 have their convex side 9A facing to the opposite longitudinal side 3 as the other toothing 8. This is clearly visible in Fig. 1.

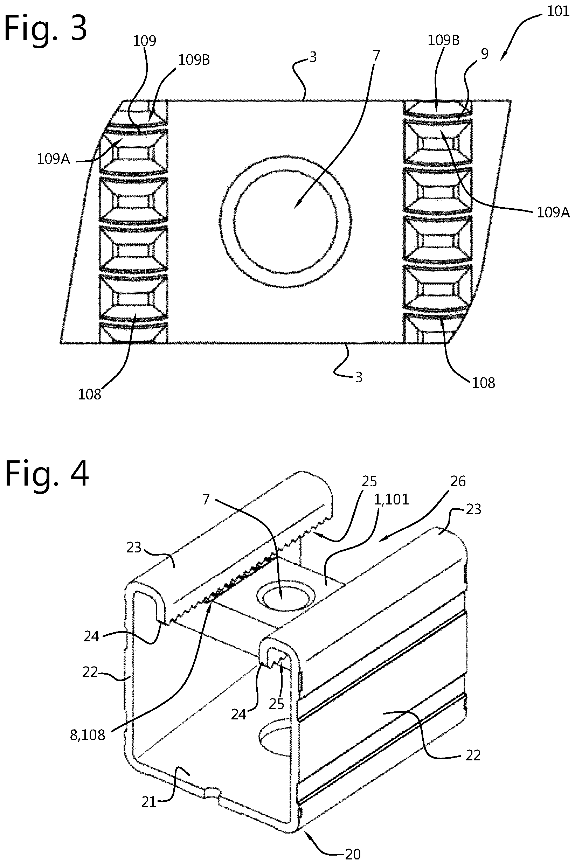

Another embodiment of anchoring element is shown in Fig. 3 and is indicated by reference numeral 101. In this embodiment, the toothings are indicated by reference numeral 108 and the teeth are indicated by reference numerals 109. Also, in this embodiment the teeth 109 are curved and their convex side is indicated by reference numeral 109A and the concave side is indicated by reference numeral 109B. The curvatures of the teeth 109 of the different toothings 108 are in the same direction in this embodiment, i.e. the teeth 109 of one toothing 108 have their convex side 109A facing to the same longitudinal side 3 as the teeth 109 of the other toothing 108. This is clearly visible in Fig. 3. For the rest the anchoring element 101 can be the same as the anchoring element 1 and for a description of the other features is referred to the description associated with Figs. 1 and 2.

In Fig. 4 is illustrated an anchoring element 1, 101 which is arranged in a mounting rail 20. The mounting rail 20 comprises a rail profile having a generally C-shaped cross section. The mounting rail 20 is a so called "strut rail" having a bottom 21, two lateral walls 22 extending from the bottom and an upper side comprising two flanges 23, which extend from the lateral walls 22 towards each other and which define a longitudinal slot 26 between them. Typical for a "strut rail" is that the flanges 23 are folded inwardly such that the edges 24 of the flanges 23 are facing the bottom 21 of the rail 20. The edges 24 are provided with toothing 25. Such a strut rail 20 is generally made of metal, in particular steel.

During installation of the anchoring element 1, 101 in the rail 20, the longitudinal sides 3 of the anchoring element 1, 101 are aligned with the longitudinal slot 26 of the mounting rail 20. This allows introduction of the anchoring element 1, 101 into the mounting rail 20 through the longitudinal slot 26. After introduction of the anchoring element 1, 101 through the longitudinal slot 26, thus when the anchoring element has moved beyond the edges 24 of the flanges 23, the anchoring element 1, 101 can be rotated clockwise to a mounted state around a rotation axis, which is in this embodiment coinciding with the centre axis of the threaded bore 7. By this rotation the longitudinal sides 3 of the anchoring element 1, 101 are misaligned with the longitudinal slot 26 such that the respective toothings 8, 108 of the anchoring element 1, 101 engage the edge 24 of the respective flanges 23 of the mounting rail 1,101 and mesh with the toothing 25 on the respective edges 24. This mounted state is shown in Fig. 4.

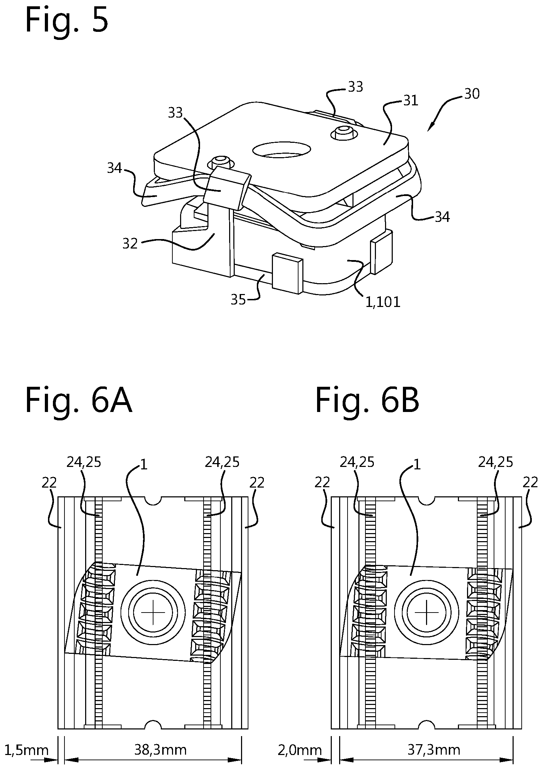

The anchoring element 1, 101 will in general not be used as a separate part, but will for instance be part of a fastening assembly 30 furthermore comprising a washer 31 and an intermediate part 32 interconnecting the anchoring element 1, 101 and the washer 31, as is for example shown in Fig. 5. The intermediate part 32 in this example is an integrally formed plastic part which has a bottom support 35 that carries the metal anchoring element 1, 101, and furthermore includes a head portion 33 that is connected to the washer 31. Two opposite spring elements 34 surrounding the washer 31 element are connected to the head portion 33 and are adapted to engage flanges 23 of the mounting rail 20. This fastener assembly 30 allows the anchoring element to be introduced in the rail 20 via the longitudinal slot 26 as was described in the above. Subsequently by turning of the fastener assembly 30 clockwise, the anchoring element 1, 101 extends at an angle relative to the longitudinal slot 26, such that the flanges 23 of the mounting rail 20 are accommodated in spaces between the washer element 31 and longitudinal end portions of the anchoring element 1, 101. In this position the spring elements 34 engage the upper side of the flanges 23 of the mounting rail 20 and bias the fastening assembly 30 upwards such that the toothings 8, 108 of the anchoring element 1, 101 are pulled in engagement with the flanges 23 of the mounting rail 20. In particular the toothings 25 on flange edges mesh with the toothings 8, 108 in the top surface 5 of the anchoring element 1, 101. In this state the fastening assembly is in a preliminary mounting state, in which it is held stationary on the mounting rail 20 by the spring force of the spring elements 34. By pushing the washer down the toothings 8, 108 can be decoupled from the toothings 25 on the flange edges 24 and the fastening assembly 30 is allowed to be moved along the mounting rail 20 towards its desired position. When the fastening assembly 30 is in its desired position, the anchoring element 1, 101 and the washer element 31 can be tensioned towards each other by means of a male fastening element such as a threaded rod (not shown) screwed in the threaded bore 7 in the anchoring element 1, 101 and a nut (not shown) engaging the washer element 31. The flanges 23 of the mounting rail 20 are thereby clamped between the longitudinal end portions, in particular the toothings 8, 108 formed therein, of the anchoring element 1, 101 and the washer element 31 in order to fix the fastening assembly 30 to the mounting rail 20.

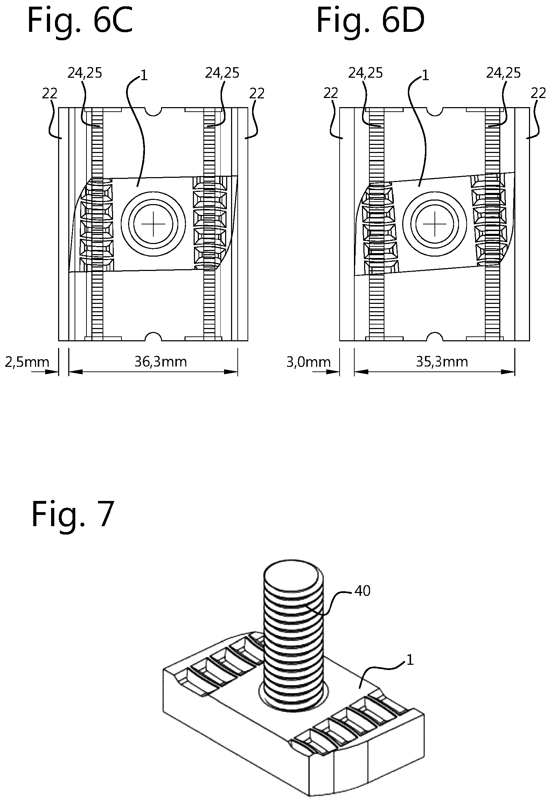

As is for example shown in Fig. 7, the anchoring element 1, 101 may also be part of a fastening assembly in which a threaded rod 40 is connected to the anchoring element 1, 101. It is even possible that the anchoring element is embodied as a bolt head wherein it is fixed as a sort of hammerhead to a (threaded) shank.

Also other fastening assemblies than the examples mentioned above are possible.

The advantage of an anchoring element 1, 101 according to the invention is illustrated in Figs. 6A - 6D. In Figs. 6A - 6D is shown a rail 20 which has the same outer dimensions, but is made of steel sheet with a thickness of 1,5 mm, 2,0 mm, 2,5 mm and 3,0 mm, respectively. As a consequence, the rails 20 shown in Fig. 6A - 6D have a decreasing internal space and a thicker flange edge 24 seen from Fig. 6A to Fig. 6D.

In the mounting rail 20 of Fig. 6A the anchoring element 1, which is turned clockwise to the misaligned state, in which the opposite corners of the anchoring element 1 abut the inner side of the lateral walls 22, is turned further than the same anchoring element in Fig. 6B. The same is the case comparing Figs. 6B and 6C and comparing Figs. 6C and 6D. From these comparisons it becomes clear that the same anchoring element can end up in different rotational positions in a mounting rail 20, and thus that the orientation of the toothings 8 on the anchoring element may vary with respect to the toothings 25 on the edges 24 of the flanges 23. The track of teeth is wider than the width of the flange edge 24, i.e. the width of the toothing 8, 108 exceeds the width of the flange edge 24. The curved shape of the teeth 9 assures that the teeth 9 on the anchoring element 1 and the teeth on the flange edge 24 at their mutual meshing are always aligned face to face. This has the effect that a sufficient grip between the anchoring element 1 and the edge of the flanges 24 can always be assured, no matter the exact rotational orientation of the anchoring element 1 inside the mounting rail.

## Claims

1. Anchoring element (1, 101) for anchoring a fastening assembly (30) to a C-shaped mounting rail (20), the anchoring element (1, 101) comprising an oblong metal body having opposite longer longitudinal sides (3) and opposite shorter transversal sides (4), and having a top surface (5), wherein a pair of parallel toothings (8, 108) is formed in the top surface (5), said toothings (8, 108) extending substantially straight from one of the longitudinal sides (3) to the other one of the longitudinal sides (3), **characterised in that** each of the toothings (8, 108) has teeth (9, 109) which are curved having a radius of curvature substantially parallel to the top surface (5) of the anchoring element (1, 101).

2. Anchoring element according to claim 1, wherein the teeth (9, 109) have a convex side (9A, 109A) and a concave side (9B, 109B), wherein the convex side (9A, 109A) faces one of the longitudinal sides (3) of the anchoring element (1, 101), and the concave side (9B, 109B) faces the other longitudinal side (3) of the anchoring element (1, 101).

3. Anchoring element according to claim 2, wherein the teeth (9) of the respective toothings (8) are facing with their convex side (9A) in opposite directions.

4. Anchoring element according to claim 2, wherein the teeth (109) of the respective toothings (108) are facing with their convex side (109A) in the same direction.

5. Anchoring element according to any of the preceding claims, wherein the longitudinal sides (3) are straight and mutually parallel.

6. Anchoring element according to any of the preceding claims, wherein the transverse sides (4) extend under an angle smaller than 90° with respect to the longitudinal sides (3).

7. Anchoring element according to any of the preceding claims, wherein the transversal sides (4) have a curved portion (4A) and a straight portion (4B).

8. Anchoring element according to any of the preceding claims, furthermore having a threaded bore (7) in the centre.

9. Fastening assembly (30) comprising an anchoring element (1, 101) according to any of the preceding claims, and furthermore comprising a washer (31) and an intermediate part (32) interconnecting the anchoring element (1, 101) and the washer (31).

10. Fastening assembly according to claim 9, wherein the intermediate part (32) is made of plastic.

11. Fastening assembly according to claim 9 or 10, wherein the intermediate part (32) comprises spring members (34) allowing to hold the fastening assembly (30) on the mounting rail (20) in a preliminary mounting state.

12. Fastening assembly comprising an anchoring element according to any of the claims 1-8, and furthermore comprising a fastener rod (40) connected to the anchoring element (1, 101).

13. Use of an anchoring element (1, 101) according to any of the claims 1-8 for mounting an object to a mounting rail (20),
said mounting rail (20) having generally a C-shaped cross section and including a pair of inwardly folded longitudinal flanges (23) defining a longitudinal slot (26) between them,
wherein the longitudinal sides (3) of the anchoring element (1, 101) are aligned with the longitudinal slot (26) of the mounting rail (20) so as to allow introduction of the anchoring element (1, 101) into the mounting rail (20) through the longitudinal slot (26), and wherein after introduction of the anchoring element (1, 101) through the longitudinal slot (26) of the mounting rail (20), the anchoring element (1, 101) is rotated to a mounted state around a rotation axis normal to the upper surface (5) of the anchoring element (1, 101) to misalign the longitudinal sides (3) of the anchoring element (1, 101) with the longitudinal slot (26) to a mounted state, wherein the toothing (8, 108) engages the edges (24) of the flanges (23) of the mounting rail (20).

## Patentansprüche

1. Verankerungselement (1, 101) zum Verankern einer Befestigungsanordnung (30) an einer C-förmigen Montageschiene (20), wobei das Verankerungselement (1, 101) einen länglichen Metallkörper mit entgegengesetzten längeren Längsseiten (3) und entgegengesetzten kürzeren Querseiten (4) und mit einer oberen Fläche (5) umfasst, wobei ein Paar paralleler Verzahnungen (8, 108) in der oberen Fläche (5) gebildet ist, wobei sich die Verzahnungen (8, 108) im Wesentlichen gerade von einer der Längsseiten (3) zur anderen der Längsseiten (3) erstrecken, **dadurch gekennzeichnet, dass** jede der Verzahnungen (8, 108) Zähne (9, 109) aufweist, die mit einem Krümmungsradius im Wesentlichen parallel zur oberen Fläche (5) des Verankerungselements (1, 101) gekrümmt sind.

2. Verankerungselement nach Anspruch 1, wobei die Zähne (9, 109) eine konvexe Seite (9A, 109A) und eine konkave Seite (9B, 109B) aufweisen, wobei die konvexe Seite (9A, 109A) zu einer der Längsseiten (3) des Verankerungselements (1, 101) weist und die konkave Seite (9B, 109B) zur anderen Längsseite (3) des Verankerungselements (1, 101) weist.

3. Verankerungselement nach Anspruch 2, wobei die Zähne (9) der jeweiligen Verzahnungen (8) mit ihrer konvexen Seite (9A) in entgegengesetzte Richtungen weisen.

4. Verankerungselement nach Anspruch 2, wobei die Zähne (109) der jeweiligen Verzahnungen (108) mit ihrer konvexen Seite (109A) in dieselbe Richtung weisen.

5. Verankerungselement nach einem der vorhergehenden Ansprüche, wobei die Längsseiten (3) gerade und zueinander parallel sind.

6. Verankerungselement nach einem der vorhergehenden Ansprüche, wobei sich die Querseiten (4) in einem Winkel kleiner als 90° in Bezug auf die Längsseiten (3) erstrecken.

7. Verankerungselement nach einem der vorhergehenden Ansprüche, wobei die Querseiten (4) einen gekrümmten Abschnitt (4A) und einen geraden Abschnitt (4B) aufweisen.

8. Verankerungselement nach einem der vorhergehenden Ansprüche, das ferner eine Gewindebohrung (7) in der Mitte aufweist.

9. Befestigungsanordnung (30), die ein Verankerungselement (1, 101) nach einem der vorhergehenden Ansprüche umfasst und ferner eine Unterlegscheibe (31) und einen Zwischenteil (32), der das Verankerungselement (1, 101) und die Unterlegscheibe (31) verbindet, umfasst.

10. Befestigungsanordnung nach Anspruch 9, wobei der Zwischenteil (32) aus Kunststoff besteht.

11. Befestigungsanordnung nach Anspruch 9 oder 10, wobei der Zwischenteil (32) Federelemente (34) umfasst, die ein Halten der Befestigungsanordnung (30) auf der Montageschiene (20) in einem vorläufigen Montagezustand ermöglichen.

12. Befestigungsanordnung, die ein Verankerungselement nach einem der Ansprüche 1-8 umfasst und ferner eine mit dem Verankerungselement (1, 101) verbundene Befestigungsstange (40) umfasst.

13. Verwendung eines Verankerungselements (1, 101) nach einem der Ansprüche 1-8 zur Montage eines Objekts an einer Montageschiene (20),
wobei die Montageschiene (20) einen im Allgemeinen C-förmigen Querschnitt aufweist und ein Paar nach innen gefalteter Längsflansche (23), die einen Längsschlitz (26) zwischeneinander definieren, umfasst,
wobei die Längsseiten (3) des Verankerungselements (1, 101) mit dem Längsschlitz (26) der Montageschiene (20) derart ausgerichtet sind, dass ein Einführen des Verankerungselements (1, 101) in die Montageschiene (20) durch den Längsschlitz (26) ermöglicht wird, und wobei nach Einführen des Verankerungselements (1, 101) durch den Längsschlitz (26) der Montageschiene (20) das Verankerungselement (1, 101) um eine Drehachse normal zur oberen Fläche (5) des Verankerungselements (1, 101) in einen Montagezustand gedreht wird, um die Längsseiten (3) des Verankerungselements (1, 101) mit dem Längsschlitz (26) in einen Montagezustand zu versetzen, wobei die Verzahnung (8, 108) die Kanten (24) der Flansche (23) der Montageschiene (20) in Eingriff nimmt.

## Revendications

1. Élément d'ancrage (1, 101) servant à ancrer un ensemble de fixation (30) à un rail de support (20) en C, l'élément d'ancrage (1, 101) comprenant un corps métallique oblong comportant des côtés longitudinaux (3) opposés plus longs et des côtés transversaux (4) opposés plus courts, et comportant une surface supérieure (5), une paire de dentures parallèles (8, 108) étant formées dans la surface supérieure (5), lesdites dentures (8, 108) s'étendant sensiblement de manière rectiligne de l'un des côtés longitudinaux (3) à l'autre des côtés longitudinaux (3), **caractérisé en ce que** chacune des dentures (8, 108) comporte des dents (9, 109) qui sont incurvées, présentant un rayon de courbure sensiblement parallèle à la surface supérieure (5) de l'élément d'ancrage (1, 101).

2. Élément d'ancrage selon la revendication 1, dans lequel les dents (9, 109) comportent un côté convexe (9A, 109A) et un côté concave (9B, 109B), dans lequel le côté convexe (9A, 109A) est orienté vers l'un des côtés longitudinaux (3) de l'élément d'ancrage (1, 101), et le côté concave (9B, 109B) est orienté vers l'autre côté longitudinal (3) de l'élément d'ancrage (1, 101).

3. Élément d'ancrage selon la revendication 2, dans lequel les dents (9) des dentures (8) respectives sont orientées avec leur côté convexe (9A) dans des directions opposées.

4. Élément d'ancrage selon la revendication 2, dans lequel les dents (109) des dentures (108) respectives sont orientées avec leur côté convexe (109A) dans la même direction.

5. Élément d'ancrage selon l'une quelconque des revendications précédentes, dans lequel les côtés longitudinaux (3) sont rectilignes et mutuellement parallèles.

6. Élément d'ancrage selon l'une quelconque des revendications précédentes, dans lequel les côtés transversaux (4) s'étendent à un angle inférieur à 90° relativement aux côtés longitudinaux (3).

7. Élément d'ancrage selon l'une quelconque des revendications précédentes, dans lequel les côtés transversaux (4) comportent une partie incurvée (4A) et une partie rectiligne (4B).

8. Élément d'ancrage selon l'une quelconque des revendications précédentes, comportant, en outre, un trou taraudé (7) en son centre.

9. Ensemble de fixation (30) comprenant un élément d'ancrage (1, 101) selon l'une quelconque des revendications précédentes, et comprenant, en outre, une rondelle (31) et une partie intermédiaire (32) reliant l'élément d'ancrage (1, 101) et la rondelle (31) l'un à l'autre.

10. Ensemble de fixation selon la revendication 9, dans lequel la partie intermédiaire (32) est faite en plastique.

11. Ensemble de fixation selon la revendication 9 ou 10, dans lequel la partie intermédiaire (32) comprend des éléments élastiques (34) permettant de maintenir l'ensemble de fixation (30) sur le rail de support (20) dans un état d'installation préliminaire.

12. Ensemble de fixation comprenant un élément d'ancrage selon l'une quelconque des revendications 1 à 8, et comprenant, en outre, une tige de fixation (40) raccordée à l'élément d'ancrage (1, 101).

13. Utilisation d'un élément d'ancrage (1, 101) selon l'une quelconque des revendications 1 à 8, pour l'installation d'un objet sur un rail de support (20),
ledit rail de support (20) présentant une section transversale globalement en C et comprenant une paire d'ailettes longitudinales (23) repliées vers l'intérieur définissant une fente longitudinale (26) entre elles,
les côtés longitudinaux (3) de l'élément d'ancrage (1, 101) étant alignés avec la fente longitudinale (26) du rail de support (20) de façon à permettre l'introduction de l'élément d'ancrage (1, 101) dans le rail de support (20) à travers la fente longitudinale (26) et, après l'introduction de l'élément d'ancrage (1, 101) à travers la fente longitudinale (26) du rail de support (20), une rotation étant appliquée à l'élément d'ancrage (1, 101), de façon à établir un état installé, autour d'un axe de rotation perpendiculaire à la surface supérieure (5) de l'élément d'ancrage (1, 101) afin de désaligner les côtés longitudinaux (3) de l'élément d'ancrage (1, 101) relativement à la fente longitudinale (26) de façon à établir un état installé, la denture (8, 108) entrant en prise avec les bords (24) des ailettes (23) du rail de support (20).
